(19) Europäisches Patentamt

European Patent Office

Office européen des brevets

(11) Publication number: **0 369 070 B1**

(12) **EUROPEAN PATENT SPECIFICATION**

(45) Date of publication of patent specification: **16.02.94**  (51) Int. Cl.⁵: **C08F 2/06**, C08J 3/09

(21) Application number: **88310731.0**

(22) Date of filing: **14.11.88**

(54) **Process for production of nonaqueous dispersion-type resin.**

(43) Date of publication of application:
**23.05.90 Bulletin  90/21**

(45) Publication of the grant of the patent:
**16.02.94 Bulletin  94/07**

(84) Designated Contracting States:
**DE FR GB**

(56) References cited:
**GB-A- 2 090 264**

(73) Proprietor: **DAINIPPON INK AND CHEMICALS, INC.**
**35-58, Sakashita 3-chome**
**Itabashi-ku, Tokyo 174(JP)**

(72) Inventor: **Iwamura, Goro**
**3-27-3, Miikedai**
**Sakai-shi Osaka-fu(JP)**
Inventor: **Konno, Hidetoshi**
**4-17, Jyonan-cho**
**Izumi-ohtsu-shi Osaka-fu(JP)**
Inventor: **Shoji, Akio**
**2-20-10, Tenjinyama-cho**
**Kishiwada-shi Osaka-fu(JP)**

(74) Representative: **Myerscough, Philip Boyd et al**
**J.A.Kemp & Co.**
**14, South Square**
**Gray's Inn**
**London, WC1R 5EU (GB)**

**Description**

This invention relates to a process for the production of a nonaqueous dispersion-type resin. More specifically, this invention relates to a process for the production of a nonaqueous dispersion-type resin of polymer particles stabilized against agglomeration in an organic liquid which does not dissolve the resin, which comprises subjecting a vinyl-type uniform polymer solution to phase inversion using a specific organic liquid.

As a conventional method for producing a non-aqueous dispersion-type resin, there is a method wherein in an organic liquid in which monomers are soluble but a polymer composed of said monomers is insoluble, a mixture of such monomers is polymerized and pulverized. However, a monomer greatly different from an organic liquid in solubility parameter has insufficient solubility in a dispersion liquid. Accordingly, there is a defect that in polymerization in this type of liquid, polymer particles having a uniform particle size can hardly be obtained.

In the conventional method, the particle size is adjusted by making the solubility parameter of the dispersion liquid close to that of the monomer. This amounts however to reducing dispersibility and results in a nonaqueous dispersion-type resin having a nonuniform particle size and poor stability. A paint using the nonaqueous dispersion-type resin having nonuniform particle size and poor stability, obtained by such method, often causes formation of a "rugged surface".

The aforesaid defect is notably seen when using a monomer much different in solubility parameter from an aliphatic hydrocarbon liquid and/or an alicyclic hydrocarbon liquid, e.g. a hydroxyl group-containing monomer, a carboxyl group-containing monomer or a vinyl monomer mixture containing these monomers, or in dispersing in a dispersion liquid, e.g. an acrylic copolymer much different in solubility parameter from an organic liquid having a high polarity such as an alcohol solvent.

GB-A-2 090 264 discloses a solution polymerisation process for the preparation of a polymeric material having a weight average molecular weight from 5,000 to 20,000,000 and comprising cross-linked particles which are capable of forming a sol in the reaction solvent, which process comprises:

(i) polymerising one or more monomers, the or at least one of which is a cross-linking agent, in a solvent which (a) has a solubility parameter from 2.5 $cal^{\frac{1}{2}}ml^{-3/2}$ below to 1.0 $cal^{\frac{1}{2}}ml^{-3/2}$ above the solubility parameter of the bulk polymeric material and (b) is of the same or adjacent hydrogen bonding group as the bulk polymeric material;

(ii) monitoring the polymerisation until polymeric material is obtained; and

(iii) terminating the polymerisation before gelation is obtained.

It is an object of the present invention to provide a process for producing a non-aqueous dispersion-type resin having a uniform particle size even in case of a combination of such inconvenient materials.

Thus, the present invention provides a process for the production of a non-aqueous dispersion-type resin, which process comprises

a) uniformly polymerising by radical polymerisation in an organic polymerisation solvent, a vinyl monomer or a mixture comprising at least 1% by weight of a vinyl monomer, together with a reactive resin which is soluble in the polymerisation solvent and which has a molecular weight of 2,000 or more, to thereby obtain a solution of a non-aqueous dispersion-type resin in the polymerisation solvent; and

b) replacing the polymerisation solvent by an organic dispersion liquid which does not dissolve the non-aqueous dispersion-type resin, such that phase inversion occurs and a non-aqueous dispersion of the said resin is obtained;

wherein the polymerisation solvent comprises an ester, an alcohol, a ketone or a mixture of an alcohol and an aromatic hydrocarbon, the dispersion liquid comprises an aliphatic and/or alicyclic hydrocarbon, and the vinyl monomer has a solubility parameter which differs by at least 1.1 from that of the dispersion liquid.

The aforesaid reactive resin is a resin soluble in the aliphatic and/or alicyclic hydrocarbon-type organic solvent as the dispersion solvent, containing in a molecule one or more functional groups (reactive groups) of the vinyl monomer mixture and having a molecular weight of 2,000 or more.

The vinyl monomer of the vinyl monomer mixture as a monomer forming particles and the reactive resin as a grafting backbone polymer are classified as follows, for example, depending on functional groups (reactive groups) thereof.

2

| Functional group of a vinyl monomer or a vinyl monomer mixture as a monomer forming particles | Functional group being introduced into a reactive resin (grafting resin) as a grafting polymer |
| --- | --- |
| ethylenically unsaturated bond | ethylenically unsaturated bond |
| carboxylic acid (carboxyl group) | epoxide (epoxy group) |
| | amine (amino group) |
| sulfonic acid (sulfoxyl group) | amine (amino group) |
| phosphonic acid (phosphoxyl group) | hydroxymethylamide group |
| | alkoxymethylamide group |
| | dialkylaminomethylamide group |
| | alkylcarbonyloxymethylamide group |
| acid anhydride (acid anhydride group) | epoxide (epoxy group) |
| | amine (amino group) |
| | hydroxyl group |
| carbonyl chloride | amine (amino group) |
| sulfonyl chloride | |
| reactive ester linkage | amine (amino group) |

| hydroxyl group | epoxide (epoxy group) |
| | isocyanate group |
| epoxide (epoxy group) | amine (amino group) |
| isocyanate group | amine (amino group) |
| | reactive hydrogen-containing compound (active hydrogen) |
| reactive chlorine compound (reactive chlorine) | amine (amino group) |
| | hydroxyl group |

As listed above, relative to the reactive resin having the ethylenically unsaturated bond, the vinyl monomer having the ethylenically unsaturated bond or the mixture of such vinyl monomers is available as the polymer forming particles. Relative to the reactive resin having the epoxy group, the vinyl monomer having the carboxyl group or the mixture of such vinyl monomers is available as the monomer forming particles. Relative to the reactive resin having the amino group alone, the vinyl monomer having the sulfoxyl group, the vinyl monomer having carbonyl chloride, the vinyl monomer having the reactive ester linkage, or the mixture of these monomers is available as the monomer forming particles.

In this way, the above reactive resins as the grafting resin having the various functional groups or reactive groups can be designed depending on the functional groups or reactive groups of the vinyl monomers or vinyl monomer mixture as the monomer forming particles.

Typical of the grafting resin, i.e. the reactive resin soluble in the aliphatic and/or alicyclic hydrocarbon-type organic dispersion liquid and having a molecular weight of 2,000 or more are a polymer composed mainly of a monomer being an alkyl (meth)acrylate having an alkyl group with 4 or more carbon atoms, a polymer composed mainly of a vinyl monomer having 4 or more carbon atoms, an alkyd resin containing an ethylenically unsaturated bond, and a vinyl-modified alkyd resin obtained by grafting a vinyl monomer on the alkyd resin as a trunk polymer.

The molecular weight of the reactive resin as the grafting resin has to be 2,000 or more. When it is less than 2,000, the dispersion stability of particles after phase inversion can hardly be secured; it is thus undesirable.

Examples of monomers having a solubility parameter different by 1.1 or more from that of the aliphatic and/or alicyclic hydrocarbon-type organic dispersion liquid are shown below.

The "solubility parameter" used here is "Solubility Parameter Values" described in "Polymer Handbook", pp. 341-347 (published by John Wiley and Sons, 1975) as such or a value calculated on the basis of these values. Examples of the solubility parameter of preferred dispersion liquids are as follows.

| | |
|---|---|
| n-pentane | 7.0 |
| n-heptane | 7.4 |
| methylcyclohexane | 7.8 |
| "Solvesso 150" (a tradename for an aromatic hydrocarbon mixture made by Exxon Chemical K.K., U.S.A.) | 8.5 |
| isoprene | 7.4 |
| n-dodecane | 7.9 |
| "Shellsol 72" (a tradename for an aliphatic hydrocarbon solvent made by Shell K.K., Holland) | 7.2 |
| n-hexane | 7.3 |
| "VM & P Naphtha" (a tradename for an aliphatic hydrocarbon solvent made by Shell K. K.) | 7.6 |
| "Shell TB 28 Solvent" (a tradename for an aliphatic hydrocarbon solvent made by Shell K. K.) | 7.4 |

Typical examples of the monomer having the solubility parameter different by 1.1 or more from that of the hydrocarbon-type organic liquid are carboxyl group-containing ethylenically unsaturated monomers such as (meth)acrylates; and hydroxyl group-containing ethylenically unsaturated monomers such as beta-hydroxyethyl (meth)acrylate and beta-hydroxybutyl (meth)acrylate; (meth)acrylate monomers such as methyl (meth)acrylate and ethyl (meth)acrylate; ethylenically unsaturated dicarboxylic acids or their anhydrides such as maleic acid, fumaric acid, itaconic acid and their anhydrides; and nitrogen atom-containing ethylenically unsaturated monomers such as acrylamide, N,N-dimethylaminoethyl (meth)acrylate and N,N-diethylaminopropyl (meth)acrylate.

Monomers having a solubility parameter difference of less than 1.1 or a combination thereof gives half-dissolved particles and does not allow sufficient dispersion, which is therefore undesirous in this invention.

Typical examples of the ethylenically unsaturated monomer copolymerizable with the aforesaid various monomers are various (meth)acrylate monomers such as n-propyl (meth)acrylate, iso-propyl (meth)acrylate, n-butyl (meth)acrylate, iso-butyl (meth)acrylate, sec-butyl (meth)acrylate, tert-butyl (meth)acrylate, 2-ethylhexyl (meth)acrylate, lauryl (meth)acrylate, cyclohexyl (meth)acrylate and benzyl (meth)acrylate; dialkyl ($C_1$-$C_4$) esters of ethylenically unsaturated dicarboxylic acids such as diethyl maleate, dimethyl fumarate, dibutyl maleate, dibutyl fumarate and dibutyl itaconate; a cyano group-containing ethylenically unsaturated monomers such as acrylonitrile; various vinyl esters such as vinyl acetate, vinyl benzoate and "Veova" (a tradename for a branched aliphatic carboxylic acid vinyl ester made by Shell K.K.); various (per)fluoroalkyl group-containing monomers such as "Viscoat 8F, 8FM, 3F or 3FM" (a tradename for a fluorine-containing (meth)acrylate made by Osaka Yuki Kagaku K.K.); halogenated olefins such as vinyl chloride, vinylidene chloride, vinyl fluoride, vinylidene fluoride and chlorotrifluoroethylene; and aromatic vinyl monomers such as styrene, alpha-methylstyrene, p-tert-butylstyrene and vinyltoluene.

Examples of the organic polymerization solvent used in conducting the solution radical polymerization using the aforesaid various monomers are esters such as methyl acetate, ethyl acetate, n-butyl acetate and amyl acetate; ketones such as acetone, methyl ethyl ketone, methyl isobutyl ketone, methyl amyl ketone and cyclohexanone; and alcohols such as methanol, ethanol, i-propyl alcohol and n-butanol. Moreover, a combination of an aromatic hydrocarbon solvent such as toluene or xylene and an above alcohol solvent may be employed.

Such solution radical polymerization may be carried out in a usual manner using the aforesaid organic solvent for polymerization and a radical polymerization initiator (catalyst) such as an azo compound typified by azobisisobutylonitrile or a peroxide typified by benzoyl peroxide. On that occasion, if required, a chain transfer agent such as lauryl mercaptan, octyl mercaptan or alpha-methylstyrene dimer may be used as a molecular weight modifier.

In the process of this invention, the polymerization is performed using the aforesaid starting materials, and subsequently, while removing the organic polymerisation solvent from the obtained uniform polymer solution, the solvent is parallelly replaced by adding dropwise an organic dispersion liquid, which is an aliphatic and/or alicyclic hydrocarbon-type organic liquid to the system. In that case, the viscosity of the system increases most drastically when the ratio of the alcohol, ketone or ester solvent as the polymerisation solvent and the aliphatic and/or alicyclic hydrocarbon-type organic liquid as the dispersion liquid reaches a fixed value (the value varies with the type of solvent, the type of dispersion liquid and the structure of the resin). When the ratio is outside said fixed value and the amount of the aliphatic and/or alicyclic hydrocarbon liquid is larger, the viscosity decreases.

Examples of the aliphatic hydrocarbon-type organic dispersion liquid are, besides the aforesaid examples, "LAWS" (a tradename for a product made by Shell K.K., Holland), "Isoper E or G" (a tradename for a product made by Exxon Chemical K.K.), "Naphtha No. 5 or No. 6" (a tradename for a product made by Exxon Chemical K.K.), "IP Solvent 1620" (a tradename for a product made by Idemitsu Sekiyu Kagaku K.K.) and "Whitesol" (a tradename for a product made by Kyodo Sekiyu K.K.). A mixture of an aliphatic hydrocarbon and an aromatic hydrocarbon is also included in this invention. In this instance, the aliphatic hydrocarbon has to be used in an amount of 50% by weight or more.

Meanwhile, typical examples of the alicyclic hydrocarbon dispersion liquid are cyclohexane and ethylcyclohexane. The conjoint use of an alicyclic hydrocarbon and an above aliphatic hydrocarbon, as well as the conjoint use of an alicyclic hydrocarbon and an aromatic hydrocarbon is also included in this invention. In case of the conjoint use of the alicyclic hydrocarbon and the aromatic hydrocarbon, the amount of alicyclic hydrocarbon has to be 50% by weight or more.

Of course, such merit can be expected that as the difference in boiling point between the polymerization solvent (the above organic solvent) and the dispersion liquid (the above aliphatic and/or alicyclic hydrocarbon) is greater, the final dispersion can be produced in a shorter period of time.

Where iso-propyl alcohol or methyl ethyl ketone is combined with "LAWS" or "Isoper E", the above merit in production is expectable. On the contrary, in case of such a combination that boiling points are close to each other with a difference of less than 20°C, it takes a long time to replace the polymerisation solvent. For this reason, it is advisable to select a combination of the solvents such that the difference in boiling points is 20°C or higher.

Thus, the process of this invention can provide a nonaqueous dispersion-type resin having a high carboxyl group content, an average particle size of about 0.1 to 0.8 micron and excellent stability.

The nonaqueous dispersion-type resin having these varied characteristics is available as a coating, a bonding agent or a sealer.

The following Referential Examples, Examples and Comparative Examples illustrate this invention more specifically. Parts and percentages in these examples are all by weight unless otherwise indicated.

Referential Example 1 [Preparation example of an ethylenically unsaturated bond-containing reactive resin]

A four-necked flask fitted with a thermometer, a stirrer, a reflux condenser and a nitrogen gas introducing inlet was charged with 66.7 parts of "Isoper E" and 0.3 part of di-tert-butyl peroxide, and heated up to 120°C. When said temperature was reached, a mixture comprising 97 parts of n-butyl methacrylate, 6 parts of tert-butyl peroctoate and 2 parts of thioglycolic acid were added dropwise over the course of 5 hours. Even after the addition was over, the reaction continued at the same temperature for 5 hours.

Subsequently, 3 parts of glycidyl methacrylate (GMA) was added, and the reaction was carried out at 125°C for 4 hours. There resulted a final resin having a nonvolatile content of 60%, a Gardner viscosity at 25°C (the same applies to the following) of X and a number-average molecular weight ($\overline{\mathrm{Mn}}$) of 4,000. This is designated RR-1.

Referential Example 2 [Preparation example of an epoxy group-containing reactive resin]

The same flask as used in Referential Example 1 was charged with 100 parts of "LAWS" and 0.2 part of di-tert-butyl peroxide, and heated up to 120°C. When said temperature was reached, a mixture comprising 98 parts of iso-butyl methacrylate, 2 parts of GMA and 8 parts of tert-butyl peroctoate was added dropwise over the course of 6 hours. Even after the addition was over, the same temperature was kept for 5 hours. There resulted a final resin having a nonvolatile content of 50%, a Gardner viscosity of E and $\overline{\mathrm{Mn}}$ of 5,500. This is designated RR-2.

Referential Example 3 [Preparation example of an amino group-containing reactive resin]

The procedure in Referential Example 2 was repeated except that the same amount of N,N-dimethylaminoethyl methacrylate was used instead of GMA. There was obtained a final resin having a nonvolatile content of 50%, a Gardner viscosity of D and $\overline{\mathrm{Mn}}$ of 6,000. This is designated RR-3.

Referential Example 4 [Preparation example of an isocyanate group-containing reactive resin]

The procedure in Referential Example 2 was repeated except that the same amount of isocyanate ethyl methacrylate was used instead of GMA. There was obtained a final resin having a nonvolatile content of 50%, a Gardner viscosity of G and $\overline{M}n$ of 6,300. This is designated RR-4.

Referential Example 5 [Preparation example of a hydroxyl group-containing reactive resin]

The procedure in Referential Example 2 was repeated except that the same amount of beta-hydroxyethyl methacrylate was used instead of GMA. There was obtained a final resin having a nonvolatile content of 50%, a Gardner viscosity of I and $\overline{M}n$ of 6,900. This is designated RR-5.

Referential Example 6 [Preparation example of a hydroxymethylamide group-containing reactive resin]

The procedure in Referential Example 2 was repeated except that the same amount of methylolacrylamide was used instead of GMA. There was obtained a final resin having a nonvolatile content of 50.3 %, a Gardner viscosity of S and $\overline{M}n$ of 8,000. This is designated RR-6.

Example 1

The same flask as used in Referential Example 1 was charged with 20 parts of iso-propyl alcohol, 40 parts of methyl ethyl ketone and 0.2 part of di-tert-butyl peroxide, and heated up to 80°C. Subsequently, 10 parts of methyl methacrylate, 20 parts of styrene, 30 parts of ethyl acrylate, 5 parts of beta-hydroxyethyl methacrylate, 15 parts of methacrylic acid, 40 parts of the reactive resin RR-1 being a so-called polymerizable monomer obtained in Referential Example 1, 3 parts of tert-butyl peroctoate and 20 parts of i-propyl alcohol was added dropwise over the course of 5 hours. Even after the addition was over, the reaction continued at the same temperature. There resulted a solution of a vinyl resin (a so-called uniform polymer) having a non-volatile content of 50% and a Gardner viscosity of Y.

Subsequently, while the temperature was progressively raised from 80°C, iso-propyl alcohol and methyl ethyl ketone were distilled off from the system, and at the same time "Isoper E" was added dropwise to the system. When 100°C was reached, distilling off of 80 parts of iso-propyl alcohol and methyl ethyl ketone was completed, and the addition of "Isoper E" was therefore finished.

Thus, the final nonaqueous dispersion-type resin, i.e. the nonaqueous dispersion of the vinyl resin was obtained. This was an opalescent nonaqueous dispersion having a nonvolatile content of 50% and a Gardner viscosity of P-Q.

An average particle size of the resin was measured by Coulter Model N-4 of a Sub-micron particle analyzer manufactured by Coulter Electronics, U.S.A. (the same applies to the following), and found to be 0.15 micron.

Examples 2 to 8

The procedure in Example 1 was followed except changing the polymerization solvent, the polymerizable monomer mixture and the catalyst as shown in Table 1. There were obtained various resin solutions.

Properties (nonvolatile content, Gardner viscosity and $\overline{M}n$) of each of the resin solutions are shown in Table 1.

Subsequently, the procedure in Example 1 was followed except changing the organic solvent for dispersion as shown in Table 2. There were obtained various opalescent nonaqueous dispersions.

Properties (nonvolatile content, Gardner viscosity and average particle size) and stability of each of the nonaqueous dispersions are shown in Table 2.

The dispersion stability was evaluated as follows.

Namely, 12 g of each of the nonaqueous dispersion-type resins (nonaqueous dispersions) was sampled in a vistube, and centrifuged by a centrifugal separator at 2,000 rpm for 4 hours. Thereafter, both a supernatant liquid and a precipitate were evaluated by visual observation.

◎ A supernatant layer is 0 mm (uniform dispersion).

○ A supernatant layer is less than 2 mm (good dispersion).

△ A supernatant layer is 2 to 10 mm.

X A supernatant layer exceeds 10 mm.

Comparative Example 1

The same flask as used in Referential Example 1 was charged with 10 parts of "Isoper E", 2 parts of di-tert-butyl peroxide and 40 parts of RR-1 obtained in Referential Example 1. Further, 10 parts of methyl methacrylate, 20 parts of styrene, 30 parts of ethyl acrylate, 5 parts of beta-hydroxyethyl methacrylate, 15 parts of methacrylic acid, 20 parts of "Isoper E" and 3 parts of tert-butyl peroctoate was added dropwise over the course of 5 hours. Even after the addition was over, the same temperature was maintained for 5 hours and the polymerization was completed.

The thus obtained dispersion was however sticked to the wall of the flask and the stirring rod, and many blocked lumps were also observed.

Naturally, the dispersion was soon separated into two layers.

Comparative Example 2

The procedure in Comparative Example 1 was followed except using monomer mixtures shown in Table 1. There were obtained nonaqueous dispersion-type resins (control dispersions).

Properties and dispersion stability of the nonaqueous dispersion-type resins were measured with the results shown in Table 2.

Comparative Example 3

The procedure in Example 1 was followed except using monomer mixtures shown in Table 1. There were obtained nonaqueous dispersion-type resins (control dispersions).

The thus obtained dispersions were however sticky and after 1 day, became cheese-like substances showing a gel condition.

Table 1

| | | | Example | | | | | | | | | Comparative Example | | |
|---|---|---|---|---|---|---|---|---|---|---|---|---|---|---|---|
| | | | 1 | 2 | 3 | 4 | 5 | 6 | 7 | 8 | 9 | 1 | 2 | 3 |
| Uniform polymer | Polymerizable monomers | RR-1 | 40 | | | | | | | | 40 | 40 | 40 | 40 |
| | | RR-2 | | 30 | | | | | | | | | | |
| | | RR-3 | | | 40 | | | | | 40 | | | | |
| | | RR-4 | | | | 28 | | | | | | | | |
| | | RR-5 | | | | | 32 | | 30 | | | | | |
| | | RR-6 | | | | | | 30 | 35 | | | | | |
| | | Methyl methacrylate | 10 | 20 | 30 | 30 | 21 | 20 | 15 | 35 | | 10 | 0.5 | 0.5 |
| | | Ethyl acrylate | 30 | | | | 10 | | | | | 30 | 49.5 | 49.5 |
| | | n-Butyl methacrylate | | 15 | | | | 20 | 20 | | | | 30 | 30 |
| | | n-Butyl acrylate | | | 30 | 16 | 10 | | | 15 | | | | |
| | | Styrene | 20 | 30 | | 20 | 20 | 20 | 10 | 5 | | 20 | | |

- to be continued -

EP 0 369 070 B1

Table 1 (continued)

| | | | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Uniform polymer | Polymerizable monomers | Methacrylic acid | 15 | 20 | | | 18 | | | | | 15 | | |
| | | Vinyl phosphonate | | | | | | 3 | | | | | | |
| | | $\beta$-Hydroxyethyl methacrylate | 5 | | 15 | 20 | | 22 | | 20 | 80 | 5 | | |
| | | Maleic acid | | | | | 5 | | | | | | | |
| | | GMA | | | 5 | | | | | 5 | | | | |
| | | Isocyanate ethyl methacrylate | | | | | | | 5 | | | | | |
| | Polymerization solvent | Methyl ethyl ketone | 40 | 45 | 80 | 86 | 84 | 85 | 85 | | 40 | | | 40 |
| | | i-propyl alcohol | 40 | 40 | | | | | | 80 | 40 | | | 40 |

– to be continued –

EP 0 369 070 B1

Table 1 (continued)

| | | | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Uniform polymer | Catalyst | tert-Butyl oxide | 3 | 2 | 1.5 | 2.5 | 1 | 4.2 | 1 | 2.5 | 4 | 3 | 3 | 3 |
| | | di-tert-Butyl peroxide | 2 | 2 | 1 | 1.2 | 2 | 1 | 1 | 1 | 2 | 2 | 2 | 2 |
| | | tert-Butyl peroxybenzoate | | | | 0.2 | 0.5 | | | 0.2 | 3.2 | | | |
| | Polymerization temperature ($^\circ$C) | | 80 | | | | | | | | | 80 | | |
| | Properties | Nonvolatile content (%) | 50.0 | 50.0 | 50.2 | 50.8 | 50.2 | 50.2 | 49.5 | 50.5 | 50.2 | 50.0 | 50.0 | 50.0 |
| | | Viscosity* | Y | $Z_1$ | $Z-Z_1$ | $Z_3$ | $Z_2$ | Y | $Z_4$ | Z | $Z_2$ | - | $Z_7$ | U |
| | | $\overline{M}n$ | 14,000 | 15,200 | 18,000 | 17,500 | 17,000 | 11,000 | 18,000 | 16,000 | 15,000 | 14,000 | 14,000 | 13,500 |

* Gardner viscosity

EP 0 369 070 B1

Table 2

| Nonaqueous dispersion-type resin | | | Example | | | | | | | | | | Comparative Example | | |
|---|---|---|---|---|---|---|---|---|---|---|---|---|---|---|---|
| | | | 1 | 2 | 3 | 4 | 5 | 6 | 7 | 8 | 9 | 1 | 2 | 3 |
| Dispersion solvent | "LAWS" | | 80 | | | | | | | | | | | |
| | Methylcyclohexane | | | | | 86 | | 85 | | 80 | | | | |
| | "Isoper E" | | | | 80 | | | | | | 80 | 80 | 80 | 80 |
| | "VH & P Naphtha" | | | 85 | | | 84 | | 85 | | | | | |
| Difference in solubility parameter | | | 5.51 | 5.31 | 2.1 | 2.1 | 5.31 | 5.51 | 1.43 | 2.1 | 2.1 | 5.51 | 1.0 | 1.0 |
| Properties | Nonvolatile content (%) | | 52.1 | 50.2 | 50.2 | 50.8 | 50.0 | 50.2 | 50.2 | 49.5 | 50.2 | 50.2 | 50.3 | 50.3 |
| | Viscosity * | | P-Q | L-M | Q-R | S-T | O-P | Z | C | T | G-H | - | $Z_2$ | >$Z_3$ |
| | Average particle size (micron) | | 0.15 | 0.12 | 0.21 | 0.25 | 0.13 | 0.32 | 0.14 | 0.30 | 0.18 | - | 0.20 | - |
| Dispersions stability | | | | | | | ◎ | | | | | x | ◎ | x |

* Gardner viscosity

## Claims

1. A process for the production of a non-aqueous dispersion-type resin having a uniform particle size which process comprises

12

a) uniformly polymerising by radical polymerisation in an organic polymerisation solvent, a vinyl monomer or a mixture comprising at least 1% by weight of a vinyl monomer, together with a reactive resin which is soluble in the polymerisation solvent and which has a molecular weight of 2,000 or more, to thereby obtain a solution of a non-aqueous dispersion-type resin in the polymerisation solvent; and

b) replacing the polymerisation solvent by an organic dispersion liquid which does not dissolve the non-aqueous dispersion-type resin, such that phase inversion occurs and a non-aqueous dispersion of the said resin is obtained;

wherein the polymerisation solvent comprises an ester, an alcohol, a ketone or a mixture of an alcohol and an aromatic hydrocarbon, the dispersion liquid comprises an aliphatic and/or alicyclic hydrocarbon, and the vinyl monomer has a solubility parameter which differs by at least 1.1 from that of the dispersion liquid.

2. A process according to claim 1 wherein the vinyl monomer mixture comprises at least one vinyl monomer having a reactive group which is an ethylenically unsaturated bond, a carboxyl group, a sulfoxyl group, a phosphoxyl group, an acid anhydride group, carbonyl chloride, sulfonyl chloride, a reactive ester linkage, an epoxy group, an isocyanate group or reactive chlorine.

3. A process according to claim 1 or 2 wherein the reactive resin comprises an alkyl (meth)acrylate polymer in which the alkyl group has 4 or more carbon atoms.

4. A process according to claim 1 or 2 wherein the reactive resin comprises a polymer derived from a vinyl monomer having 4 or more carbon atoms.

5. A process according to claim 1 or 2 wherein the reactive resin is an alkyd resin comprising an ethylenically unsaturated bond.

6. A process according to claim 1 or 2 wherein the reactive resin is a vinyl-modified alkyl resin comprising a vinyl monomer grafted on a backbone polymer which is an alkyd resin comprising an ethylenically unsaturated bond.

7. A process according to any one of the preceding claims in which the polymerisation solvent comprises methyl, ethyl, n-butyl or amyl acetate; acetone, methyl ethyl ketone, methyl isobutyl ketone, methyl amyl ketone or cyclohexanone; methanol, ethanol, iso-propyl alcohol or n-butanol; or toluene or xylene.

8. A process according to claim 7 in which the dispersion liquid comprises n-pentane, n-heptane, isoprene, n-hexane, n-dodecane or methylcyclohexane.

9. A process according to any one of the preceding claim in which the dispersion liquid comprises 50% by weight or more of an alicyclic or aliphatic hydrocarbon together with 50% by weight or less of an aromatic hydrocarbon.

**Patentansprüche**

1. Verfahren zur Herstellung einer nicht-wäßrigen Harzdispersion mit gleichförmiger Teilchengröße, wobei das Verfahren umfaßt

a) gleichförmiges Polymerisieren eines Vinylmonomers oder eines Gemisches, umfassend mindestens 1 Gew.-% eines Vinylmonomers, durch radikalische Polymerisation in einem organischen Polymerisations-Lösungsmittel zusammen mit einem reaktionsfähigen Harz, das in dem Polymerisations-Lösungsmittel löslich ist und das ein Molekulargewicht von 2000 oder darüber besitzt, um eine Lösung einer nicht-wäßrigen Harzdispersion in dem Polymerisations-Lösungsmittel zu erhalten, und

b) Ersetzen des Polymerisations-Lösungsmittels durch eine organische Dispersionsflüssigkeit, die die nicht-wäßrige Harzdispersion nicht löst, so daß eine Phasenumkehr eintritt und eine nicht-wäßrige Dispersion des Harzes erhalten wird,

wobei das Polymerisations-Lösungsmittel einen Ester, einen Alkohol, ein Keton oder ein Gemisch aus einem Alkohol und einem aromatischen Kohlenwasserstoff umfaßt, die Dispersionsflüssigkeit einen aliphatischen und/oder alicyclischen Kohlenwasserstoff umfaßt und das Vinylmonomer einen Löslichkeitsparameter besitzt, der sich um mindestens 1,1 von demjenigen der Dispersionsflüssigkeit unterscheidet.

2. Verfahren nach Anspruch 1, wobei das Vinylmonomergemisch mindestens ein Vinylmonomer umfaßt, mit einer reaktionsfähigen Gruppe, die eine ethylenisch ungesättigte Bindung, eine Carboxylgruppe, eine Sulfoxylgruppe, eine Phosphoxylgruppe, eine Säureanhydridgruppe, Carbonylchlorid, Sulfonylchlorid, eine reaktionsfähige Esterbindung, eine Epoxygruppe, eine Isocyanatgruppe oder reaktionsfähiges Chlor ist.

3. Verfahren nach Anspruch 1 oder 2, wobei das reaktionsfähige Harz ein Alkyl(meth)acrylat-Polymer umfaßt, bei dem die Alkylgruppe 4 oder mehr Kohlenstoffatome aufweist.

4. Verfahren nach Anspruch 1 oder 2, wobei das reaktionsfähige Harz ein Polymer umfaßt, das abgeleitet ist von einem Vinylmonomer mit 4 oder mehr Kohlenstoffatomen.

5. Verfahren nach Anspruch 1 oder 2, wobei das reaktionsfähige Harz ein Alkydharz ist, umfassend eine ethylenisch ungesättigte Bindung.

6. Verfahren nach Anspruch 1 oder 2, wobei das reaktionsfähige Harz ein Vinyl-modifiziertes Alkylharz ist, umfassend ein Vinylmonomer, das aufgepropft ist auf eine Polymerhauptkette, die ein Alkydharz ist, umfassend eine ethylenisch ungesättigte Bindung.

7. Verfahren nach einem der vorangehenden Ansprüche, wobei das Polymerisations-Lösungsmittel Methyl-, Ethyl-, n-Butyl- oder Amylacetat, Aceton, Methylethylketon, Methylisobutylketon, Methylamylketon oder Cyclohexanon, Methanol, Ethanol, Isopropylalkohol oder n-Butanol oder Toluol oder Xylol umfaßt.

8. Verfahren nach Anspruch 7, wobei die Dispersionsflüssigkeit n-Pentan, n-Heptan, Isopren, n-Hexan, n-Dodecan oder Methylcyclohexan umfaßt.

9. Verfahren nach einem der vorangehenden Ansprüche, wobei die Dispersionsflüssigkeit 50 Gew.% oder mehr eines alicyclischen oder aliphatischen Kohlenwasserstoffs zusammen mit 50 Gew.-% oder weniger eines aromatischen Kohlenwasserstoffs umfaßt.

**Revendications**

1. Procédé de production d'une résine en dispersion non-aqueuse et dont les particules ont une taille régulière, lequel procédé comporte :
   a) le fait de faire polymériser régulièrement, par polymérisation radicalaire dans un solvant organique de polymérisation, un monomère vinylique ou un mélange contenant au moins 1 % en poids d'un monomère vinylique, en présence d'une résine réactive qui est soluble dans le solvant de polymérisation et dont la masse moléculaire vaut 2000 ou plus, ce qui permet d'obtenir une solution de la résine pour dispersion non-aqueuse dans le solvant de polymérisation ; et
   b) le fait de remplacer le solvant de polymérisation par un liquide organique de dispersion qui ne dissout pas la résine pour dispersion non-aqueuse, de façon qu'il se produise une inversion de phases et que l'on obtienne une dispersion non-aqueuse de ladite résine ;
   procédé dans lequel le solvant de polymérisation comprend un ester, un alcool, une cétone ou un mélange d'un alcool et d'un hydrocarbure aromatique, le liquide de dispersion comprend un hydrocarbure aliphatique et/ou alicyclique, et le monomère vinylique présente un paramètre de solubilité qui diffère d'au moins 1,1 de celui du liquide de dispersion.

2. Procédé conforme à la revendication 1, dans lequel le mélange contenant un monomère vinylique comprend au moins un monomère vinylique comportant un groupe réactif qui est une liaison insaturée éthylénique, un groupe carboxyle, un groupe sulfoxyle, un groupe phosphoxyle, un groupe anhydride d'acide, un groupe chlorure de carbonyle, un groupe chlorure de sulfonyle, un chaînon ester réactif, un groupe époxy, un groupe isocyanate, ou un atome de chlore réactif.

3. Procédé conforme à la revendication 1 ou 2, dans lequel la résine réactive comprend un polymère d'acrylate ou de méthacrylate d'alkyle dont le groupe alkyle comporte 4 atomes de carbone ou plus.

14

**4.** Procédé conforme à la revendication 1 ou 2, dans lequel la résine réactive comprend un polymère dérivé d'un monomère vinylique qui comporte 4 atomes de carbone ou plus.

**5.** Procédé conforme à la revendication 1 ou 2, dans lequel la résine réactive est une résine alkyde comportant une liaison insaturée éthylénique.

**6.** Procédé conforme à la revendication 1 ou 2, dans lequel la résine réactive est une résine alkyde à modification vinylique, comportant un monomère vinylique greffé sur un squelette polymère qui est une résine alkyde comportant une liaison insaturée éthylénique.

**7.** Procédé conforme à l'une quelconque des revendications précédentes, dans lequel le solvant de polymérisation comprend acétate de méthyle, d'éthyle, de n-butyle ou d'amyle, acétone, méthyl-éthyl-cétone, méthyl-isobutyl-cétone, méthyl-amyl-cétone, cyclohexanone, méthanol, éthanol, isopropanol, n-butanol, toluène ou xylène.

**8.** Procédé conforme à la revendication 7, dans lequel le liquide de dispersion comprend n-pentane, n-heptane, isoprène, n-hexane, n-dodécane ou méthylcyclohexane.

**9.** Procédé conforme à l'une quelconque des revendications précédentes, dans lequel le liquide de dispersion contient 50 % ou plus, en poids, d'un hydrocarbure alicyclique ou aliphatique, et 50 % ou moins, en poids, d'un hydrocarbure aromatique.